# EUROPEAN PATENT SPECIFICATION

(11) **EP 0 640 824 B1**
(45) Date of publication and mention of the grant of the patent: **21.10.1998**
(21) Application number: 94306190.3
(22) Date of filing: 22.08.1994
(51) Int. Cl.: G01M 11/08

(54) **Fibre optic damage detection system**
Faseroptisches Defektmeldesystem
Système de détection de défauts par fibre optique

(30) Priority: 24.08.1993 GB 9317576
(43) Date of publication of application: 01.03.1995
(73) Proprietor: BRITISH AEROSPACE PUBLIC LIMITED COMPANY, Farnborough, Hants. GU14 6YU (GB)
(72) Inventor: Underwood, Fiona, Brit. Aerosp. Def. Ltd, Military, Farnborough, Hampshire GU14 6YU (GB); Ball, Andrew, British Aerospace Def. Ltd, Military, Farnborough, Hampshire GU14 6YU (GB)
(74) Representative: Eastmond, John

(56) References cited:
- DE-A- 3 142 392
- DE-A- 3 629 430
- GB-A- 2 136 119
- GB-A- 2 145 515
- US-A- 5 013 908
- SMART MATERIALS & STRUCTURES, vol.1, no.1, March 1992, BRISTOL (GB) pages 36 - 44, XP000399871 R.M. MEASURES ET AL. 'WAVELENGTH DEMODULATED BRAGG GRATING FIBER OPTIC SENSING SYSTEMS FOR ADDRESSING SMART STRUCTURE CRITICAL ISSUES'

## Description

This invention relates to structural damage detection systems, and more particularly to structural damage detection systems utilising optical fibres.

The use of surface mounted deformation and damage detection systems for the monitoring of structural integrity within metallic, ceramic or composite structures is well known within the construction and aerospace industries.

The monitoring of the structural integrity of any structure or "structural health" to which it is sometimes referred, consists of the measurement of a number of parameters usually including crack growth, crack direction and point strain measurement. In the field of fibre reinforced composites various techniques have been proposed for the measurement of crack and strain properties. These usually comprise of embedding the sensory device or fibre in the lay-up of the composite thus requiring detailed and specialist manufacturing techniques. In the field of metallic, ceramic and civil engineering construction, crack detection is usually conducted using "tell tales". Tell tales comprise thin sections of either glass, conductive wire or cotton which when fastened to the structure will break as a crack propagates between their fastened length. Tell tales give a visual indication of crack propagation or in the case of conductive wire can be arranged to give an electrical indication (i.e. breakage). Allied to the measurement of structural health strain measurement is usually conducted using metallic strain gauges bonded onto the surface of a structure. A recent advance in fibre optic technology was the use of "Bragg" gratings which are patterns laser etched onto a single glass fibre which perform a similar function to a conventional strain gauge but on a far reduced physical scale.

The monitoring of structural health therefore requires the combination of a number of techniques for different materials if it is to be conducted in situ i.e. from within or attached to the structure, as opposed to the traditional external non-destructive test techniques such as eddy current sensing or dye penetrant methods.

In UK Patent No. 2,145,515A (NMI Limited (UK)) a crack or strain monitor is described which comprises two longitudinally extending fibre-optic cables one of which is adhesively mounted to a structure to be monitored and the other lies in parallel to the first and above it in a super-incumbent position. This array of fibres has light sources at one common end of the fibres and light detectors at the other common end. The fibre in proximity to the structure to be monitored is a crack-sensing fibre, whilst the one above it is used as an "integrity" fibre. The outputs from the sensors trigger alarms when strain in the test structure causes the received levels to abruptly diminish by amounts exceeding a pre-determined limit.

Similarly in UK Patent No. 2,136,119A (NMI Limited (UK)) a crack monitor is described which comprises optical fibres disposed in a parallel array of grooves in a body which is attached to a structure to be monitored. Light is transmitted through the fibres and any light interruption caused by a crack in the structure, can be used to indicate the presence of a crack, e.g. by emitting visible detectable light.

DE Patent No. 31 42 392 A1 (Vereinigte Flugtechnische Werke GmbH) describes a different monitoring system for detecting the position of a discontinuity, although the principles of its operation are similar to those described above.

In US Patent No. 5,013, 908 (Kaman Sciences Corporation) another method of detecting the position of a discontinuity is described using a grid pattern of fibres as the detecting element.

In the article "Wavelength demodulated Bragg grating fiber optic sensing systems for addressing smart structure critical issues" by R.M. Measures, S. Melle and K. Liu of the University of Toronto Institute for Aerospace Studies, published in Smart Materials and Structures, Vol. 1, No. 1, March 1992, Bristol (GB) pages 36 - 44, an intercore Bragg grating discontinuity detector system is described which uses a wavelength demodulation system. The article suggests that an optoelectronic chip could be developed which would process the data from many fibre optic sensors and yet be small enough to be integrated within the structural interface so as to avoid interconnect problems between sensors and processors.

It is an object of the present invention to provide a structural damage detection system which may enable the position of a discontinuity in a structure to be more accurately established than is possible with the known systems described above.

It is another object of the present invention to provide a structural damage detection system which provides for the simultaneous monitoring of crack positioning, propagation rate, direction and point strain levels at a plurality of sites within a structure.

According to the present invention in one aspect thereof a method of measuring structural defects of a structure includes the steps of:
a) Attaching to said structure at least one structural defect sensor comprising a plurality of longitudinally extending fibre optic cables mounted in a predetermined spaced apart substantially parallel co-planer array, one side of said array being adapted for attachment to a surface of a structure to be tested,
b) coupling both ends of each of said fibre optic cables to separate ones of two light sources via optical switches,
c) monitoring variations of light parameters at both ends of said fibre optic cables, and
d) determining and displaying, from said monitored variations, parameters describing discontinuities in the structure.

According to the present invention in another aspect thereof there is provided a structural damage sensor comprising a plurality of longitudinally extending fibre optic cables mounted in a predetermined spaced apart substantially parallel co-planar array one side of said array being adapted for attachment to a surface of a structure to be tested characterised in that the sensor further includes ribbon end connectors at both ends of the array for connection to separate ones of two electro-optical light sources, switches and detector circuits, the outputs of which may be processed by a processor arranged to indicate parameters describing discontinuities on a display.

An embodiment of the invention will now be explained by way of a non-limiting example in which the following figures will be referred to:
Figure 1A and 1B are cross sectional views of known types of optical fibre ribbon cable assemblies mounted on structures to be tested in accordance with known discontinuity detection principles,
Figure 2 is a block schematic diagram of a known type of apparatus used in a typical structural health monitoring scenario,
Figure 3 is a block schematic diagram of a discontinuity detection system according to our invention and using our new method of use,
Figure 4 is a plan view of a structure under test showing the effects of crack propagation on the optical fibre ribbon cable of Figure 3,
Figure 5 is a perspective view showing the layout of typical Bragg gratings along a ribbon cable, and
Figure 6 is a plan view showing a typical application of the apparatus according to the invention to aircraft structural health monitoring.

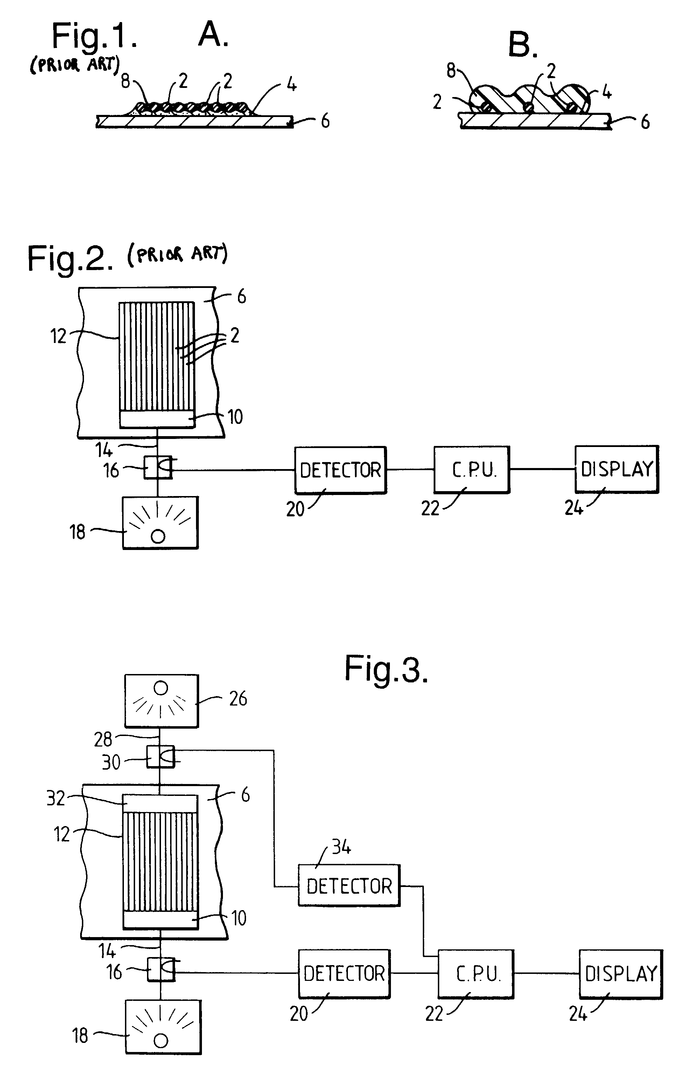

Referring to Figures 1A and 1B an array of co-planar parallel optical fibres 2 are bonded together and held in a matrix 8 which may be of either polymer or elastomeric composition. This arrangement of fibres is known as a "ribbon cable" which additionally can have some pre-impregnated adhesive surface incorporated on one side 4 to enable the cable to be bonded to a typical surface 6 shown here as metallic.

Figure 2 shows a known type of apparatus which may be used in an application for monitoring both crack properties and point strain measurements. A ribbon cable 12, comprising fibre optic cables 2 is bonded to the surface of a structure 6 using the adhesive pre-impregnated on the ribbon cable 12. The ribbon cable 12 is then fastened to an end connector 10 which combines the optical fibres 2 into a fibre bundle 14 which connects via an optical switch 16 to a light source 18.

The light from source 18 is directed along fibre bundle 14, through the optical switch 16 and into the ribbon end connector 10. The light is then passed along each individual optical fibre within which the light reflects internally either at its end position or at a break point within the ribbon 12. The reflected light travels back through the connector 10 into the fibre bundle 14 and via the optical switch 14 to a detector unit 20. In the detector unit 20 the optical signals are converted to digital or analogue form before being sent to the CPU 22 for processing. Once processed the CPU 22 outputs the information obtained to a display means 24 comprising either video or printer or alternative display format.

Figure 3 shows an arrangement according to our invention whereby a second light source 26, optical switching unit 30 and detector 34 are utilised in combination with the apparatus described in Figure 2. The reflection of light from both ends of a ribbon cable will result in two signals requiring processing by the CPU 22 and thus enables the positioning of any discontinuity on an individual fibre 2 to be more accurately established.

The detection system 20 and 34 will use an appropriate method for determining the distance of the fibre discontinuity from the light source or end connector reference position, such as time domain measurement, and a multiplexing system for determining from which fibre the light source is being analysed.

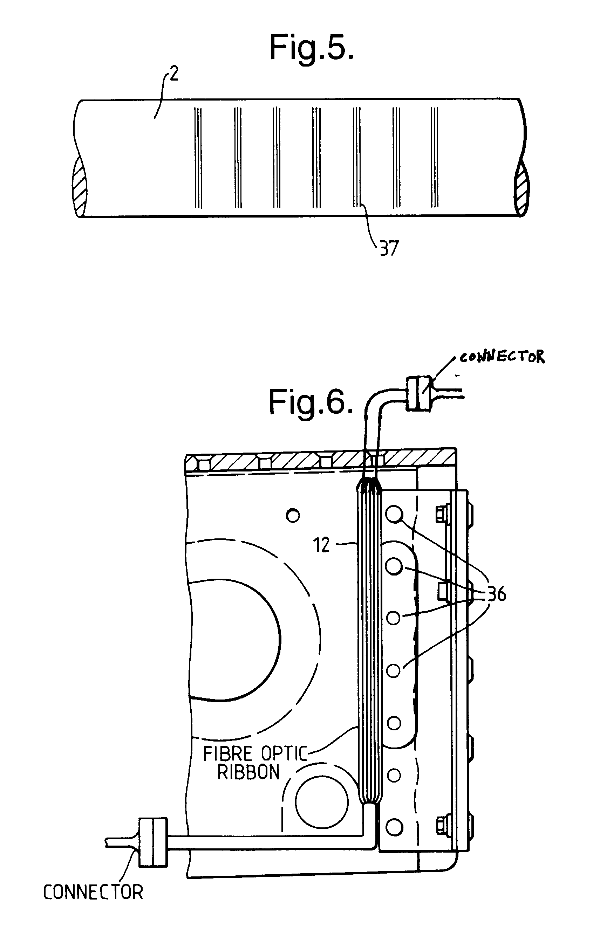

By way of an example of the invention's application to structural health monitoring, Figure 6 shows an optical fibre ribbon cable 12 with connectors at each end for attachment to electro-optical light source, switch and detector circuits in the manner shown in Figure 3 positioned adjacent to a line of fasteners 36 in a typical aircraft structure.

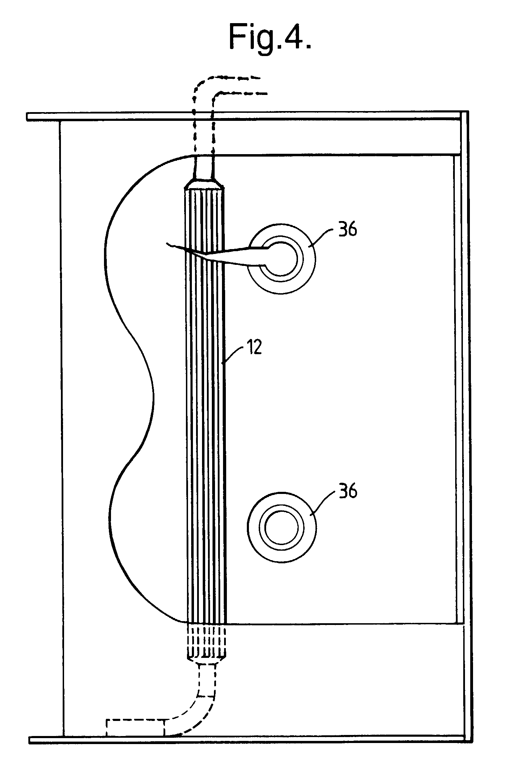

Figure 4 shows the effect of crack propagation across the fibre direction of the ribbon cable with connectors at either end in the manner of our invention and thus the damage to the fibres that will be detected by analysis.

Additionally, the fibres within the ribbon cable can be utilised to monitor point strain measurements by the inclusion of Bragg Gratings along the length of specific fibres.

Figure 5 shows one such grating 37 which when subjected to strain within the ribbon cable 12 will deform and thus produce a change in the reflected light characteristic of that fibre 2 which will be recognised by the detection system 20 and 34 (see Figure 3) as changes in strain levels.

## Claims

1. A method of measuring structural defects of a structure including the steps of:
a) Attaching to said structure at least one structural defect sensor each comprising a plurality of longitudinally extending fibre optic cables (2) mounted in a predetermined spaced apart substantially parallel co-planer array (12), one side of said array (12) being adapted for attachment to a surface (6) of a structure to be tested,
b) coupling both ends of each of said fibre optic cables (2) to separate ones of two light sources (18, 26) via optical switches (16, 30) respectively,
c) monitoring variations of light parameters at both ends of said fibre optic cables (2), and
d) determining (22) and displaying (24), from said monitored variations, parameters describing discontinuities in the structure.

2. A structural defect sensor comprising a plurality of longitudinally extending fibre optic cables (2) mounted in a predetermined spaced apart substantially parallel co-planar array (12), one side of said array (12) being adapted for attachment to a surface (6) of a structure to be tested, characterised in that the sensor further includes ribbon end connectors (10, 32) at both ends of the array (12) for connection to separate ones of two electro-optical light sources (18, 26), switches (16, 30) and detector circuits (20,34), the outputs of which may be processed by a processor (22) arranged to indicate parameters describing discontinuities on a display (24).

## Patentansprüche

1. Verfahren zur Messung struktureller Beschädigungen einer Struktur mit den folgenden Schritten:
a) es wird die Struktur an wenigstens einem strukturellen Beschädigungssensor angebracht, von denen jeder aus mehreren in Längsrichtung verlaufenden faseroptischen Kabeln (2) besteht, die im vorbestimmten gegenseitigen Abstand im wesentlichen parallel zueinander in einem ebenen Feld (12) montiert sind, wobei eine Seite des Feldes (12) an einer Oberfläche (6) der zu überprüfenden Struktur befestigbar ist,
b) es werden beide Enden von jedem faseroptischen Kabel (2) an jeweils eine von zwei getrennten Lichtquellen (18, 26) über optische Schalter (16. bzw. 30) angekoppelt,
c) es werden Veränderungen der Lichtparameter an beiden Enden der faseroptischen Kabel (2) überwacht, und
d) es werden aus den überwachten Veränderungen Parameter bestimmt (22) und dargestellt (24), die Diskontinuitäten in der Struktur beschreiben.

2. Sensor für strukturelle Beschädigungen, der mehrere in Längsrichtung verlaufende faseroptische Kabel (2) aufweist, die in vorbestimmtem, gegenseitigem Abstand im wesentlichen parallel zueinander in einem ebenen Feld (12) angeordnet sind, wobei eine Seite des Feldes (12) an einer Oberfläche (6) der zu überprüfenden Struktur befestigbar ist,
dadurch gekennzeichnet, daß der Sensor außerdem Bandendenverbinder (10, 32) an beiden Enden des Feldes (12) zur Verbindung aufweist, um eine der beiden elektro-optischen Lichtquellen (18, 26) zu trennen, und daß Schalter (16, 30) und Detektorschaltungen (20, 34) vorgesehen sind, deren Ausgänge von einem Prozessor (22) verarbeitet werden, der dazu dient, Parameter, die die Diskontinuitäten beschreiben, auf einem Display (24) abzubilden.

## Revendications

1. Procédé de mesure de défauts structurels d'une structure, comprenant les étapes suivantes :
a) la fixation de la structure à au moins un capteur de défauts structurels comprenant chacun plusieurs câbles longitudinaux (2) de fibres optiques montées avec un espacement prédéterminé en direction pratiquement parallèle à un ensemble coplanaire (12), un côté de l'ensemble (12) étant destiné à être fixé à une surface (6) d'une structure à éprouver,
b) l'accouplement des deux extrémités de chacun des câbles à fibres optiques (2) à deux sources lumineuses séparées (18, 26) par l'intermédiaire de commutateurs optiques respectifs (16, 30),
c) le contrôle des variations des paramètres de la lumière aux deux extrémités des câbles à fibres optiques (2), et
d) la détermination (22) et l'affichage (24), d'après les variations contrôlées, de paramètres décrivant des discontinuités de la structure.

2. Capteur de défauts structurels comprenant plusieurs câbles longitudinaux (2) de fibres optiques, montés sous forme d'un ensemble coplanaire pratiquement parallèle (12) avec un espacement prédéterminé, un premier côté de l'ensemble (12) étant destiné à être fixé à une surface (6) d'une structure à éprouver, caractérisé en ce que le capteur comprend en outre des connecteurs (10, 32) d'extrémité de ruban aux deux extrémités de l'ensemble (12) pour la connexion à deux sources lumineuses électro-optiques séparées (18, 26), à des commutateurs (16, 30) et à des circuits détecteurs (20, 34) dont les signaux de sortie peuvent être traités par un processeur (22) destiné à indiquer des paramètres décrivant des discontinuités sur un dispositif d'affichage (24).
